# EUROPÄISCHE PATENTSCHRIFT

(11) **EP 1 923 267 B1**
(45) Veröffentlichungstag und Bekanntmachung des Hinweises auf die Patenterteilung: **06.06.2012**
(21) Anmeldenummer: 07019222.4
(22) Anmeldetag: 29.09.2007
(51) Int. Cl.: B60R 3/02

(54) **Ein-/Ausstiegsvorrichtung für ein Fahrzeug des öffentlichen Personenverkehrs mit einem in einem Rahmen angeordneten Schiebetritt**
Embarking/disembarking device for a public transport vehicle with a retractable plate fitted in a frame
Dispositif d'entrée et de sortie pour un véhicule de transport public de personnes doté d'une pédale coulissante agencée dans un cadre

(30) Priorität: 16.11.2006 DE 202006017488 U
(43) Veröffentlichungstag der Anmeldung: 21.05.2008
(73) Patentinhaber: Gebr. Bode GmbH & Co. KG, 34123 Kassel (DE)
(72) Erfinder: Coochesfahani, Abas Rasekhi, 34128 Kassel (DE)
(74) Vertreter: Bauer Vorberg Kayser Patentanwälte

(56) Entgegenhaltungen:
- WO-A-98/06370
- DE-A1- 10 245 014
- DE-U1- 8 621 749
- GB-A- 2 405 852

## Beschreibung

Die Erfindung betrifft eine Ein-/Ausstiegsvorrichtung für ein Fahrzeug des öffentlichen Personenverkehrs mit einem in einem Rahmen angeordneten Schiebetritt mit den Merkmalen aus dem Oberbegriff des Patentanspruchs 1.

Schiebetritte werden verwendet, um Personen das Ein- und Aussteigen in ein Fahrzeug des öffentlichen Personenverkehrs zu erleichtern. Sie weisen aus diesem Grund einen ein- und ausfahrbaren Ausschub mit einer belastbaren Trittfläche auf. Der Schiebetritt kann in einem Rahmen als Aufnahmevorrichtung angeordnet sein, welcher fest mit dem Fahrzeug verbunden ist. Hierzu wird der Schiebetritt durch eine Einschuböffnung in den Rahmen eingeschoben und mittels einer oder mehrerer Befestigungseinrichtungen am Rahmen befestigt. Vorzugsweise liegt eine Schraubverbindung vor.

Problematisch ist allerdings, dass beispielsweise bei Reparaturen oder Wartungen die Montage und Demontage eines Schiebetritts in einen bzw. aus einem bereits im Fahrzeug eingebauten Rahmen aufwändig ist. Zumeist ist nur der vordere Bereich des Rahmens, d.h. der Bereich der Einschuböffnung, zugänglich, nicht aber der hintere Bereich, so dass das Lösen der Befestigungseinrichtungen im hinteren Bereich nur unter großem Aufwand möglich ist.

GB 2 405 852 A, die als nächstliegender Stand der Technik betrachtet wird, offenbart eine Ein / Ausstiegsvorrichtung mit den Merkmalen des Oberbegriffs des unabhängigen Anspruchs 1.

Aus DE 8 621 749 U ist die Befestigung eines Autofunkgerät in einer Halterung bekannt, wobei an der Halterung zwei Zentriereinrichtungen vorgesehen sind, um die Verbindung zwischen elektrischen Anschlußelementen an dem Gerät und der Halterung zu gewährleisten.

Es ist die Aufgabe der Erfindung, eine Ein-/Ausstiegsvorrichtung auszugestalten, mittels welcher eine einfache Montage und Demontage eines Schiebetritts möglich ist.

Die Erfindung löst die Aufgabe mit den Merkmalen aus dem kennzeichnenden Teil des Patentanspruchs 1. Vorteilhafte Weiterbildungen sind in den abhängigen Ansprüchen beschrieben.

Die erfindungsgemäße Ein-/Ausstiegsvorrichtung weist eine Zentriereinrichtung auf, welche ein fest am Rahmen angeordnetes und ein fest am Schiebetritt angeordnetes Zentrierelement umfasst, welche derart zusammenwirken, dass beim Einschieben des Schiebetritts in den Rahmen der Schiebetritt in eine vorgegebene Position positioniert wird. Somit ist es möglich, dass der Schiebetritt im hinteren, unzugänglichen Bereich nicht mehr befestigt werden muss. Um die Montage noch weiter zu vereinfachen, sind der Schiebetritt und der Rahmen derart ausgestaltet, dass der Schiebetritt auch um 180° bezüglich zu einer Drehachse, welche parallel zur Ausfahrrichtung verläuft, gedreht in den Rahmen einschiebbar ist. Dies ist insbesondere dann vorteilhaft, wenn der Schiebetritt nicht symmetrisch ausgestaltet ist, so dass sich durch die Drehung um 180° eine veränderte Höhe der Trittfläche ergibt, so dass die Höhe in einfacher Weise an das Fahrzeug angepasst werden kann. Vorteilhaft ist ferner, wenn die Befestigungseinrichtung im Bereich der Einschuböffnung angeordnet ist und die Zentriereinrichtung im der Einschuböffnung gegenüberliegenden Bereich, d.h. im hinteren Bereich der Vorrichtung, angeordnet ist. Dadurch ist eine allein frontseitige Befestigung für die Fixierung des Systems ausreichend. Als Befestigungsvorrichtung kann in vorteilhafter Weise eine Schraubverbindung verwendet werden.

Die Ein-/Ausstiegsvorrichtung kann mehrere Zentriereinrichtungen aufweisen, welche insbesondere nebeneinander angeordnet sind, so dass eine verbesserte Positionierung des Schiebetritts erreicht wird.

Der Schiebetritt benötigt zumeist eine elektrische Anbindung für die Zuleitung von elektrischer Energie und für die Signalübertragung. Dadurch dass der hintere Bereich nicht mehr zugänglich zu sein braucht, sollte auch die elektrische Anbindung nicht mehr durch eine manuelle Steckverbindung im hinteren Bereich geleistet werden. Deswegen kann die Ein-/Ausstiegsvorrichtung eine elektrische Steckeinrichtung aufweisen, welche ein fest am Rahmen angeordnetes und ein fest am Schiebetritt angeordnetes Steckelement umfasst, welche derart zusammenwirken, dass im eingeschobenen Zustand des Schiebetritts eine Steckverbindung für die elektrische Anbindung des Schiebetritts besteht. Vorzugsweise ist die Steckverbindung wasserdicht ausgestaltet. Durch die Zentriervorrichtung wird gewährleistet, dass auch die Steckelemente beim Einschieben des Schiebetritts positionsrichtig zusammenwirken. Der Schiebetritt kann nach dem Einschieben und Befestigen ohne weiteren Aufwand in Betrieb genommen werden.

Um das Einschieben des Schiebetritts in den Rahmen zu erleichtern, kann der Rahmen Führungsvorrichtungen, insbesondere Gleitschienen, aufweisen.

Durch die Zentriereinrichtung wird der Schiebetritt justiert und in Position gehalten. In einer bevorzugten Ausgestaltung ist ein Zentrierelement als Zapfen und das damit zusammenwirkende Zentrierelement als entsprechende Buchse, insbesondere aus Kunststoff, ausgebildet. Durch diese Ausgestaltung wird eine sichere Positionierung erreicht, zugleich ist die Konstruktion im hinteren Bereich stabiler. Eine verbesserte Wirkung der Positionierung kann noch erreicht werden, wenn der Zapfen einen kegelförmigen oder kegelstumpfförmigen Abschnitt aufweist.

Um die Ausmaße des Rahmens möglichst gering zu halten, kann der Zapfen am Rahmen und die Buchse am Schiebetritt angeordnet sein.

In einer vorteilhaften Ausgestaltung kann die Ein-/Ausstiegsvorrichtung derart ausgeführt sein, dass sie zwei oder mehr übereinander angeordnete Schiebetritte aufweist, welche jeweils mittels Befestigungseinrichtungen am Rahmen lösbar befestigbar sind, und dass sie für jeden Schiebetritt mindestens eine Zentriereinrichtung aufweist. Dies ist insbesondere vorteilhaft, wenn das Fahrzeug beispielsweise ländergrenzüberschreitend eingesetzt wird, da in verschiedenen Ländern die vorgeschriebene Höhe der Ein-/Ausstiegsvorrichtung unterschiedlich genormt sein kann. Somit kann das Fahrzeug in zwei Ländern mit unterschiedlichen Einstiegshöhen eingesetzt werden. Die Ansteuerung der Schiebetritt kann derart ausgestaltet sein, dass der Fahrer des Fahrzeugs beim Grenzübertreten einen Schalter betätigt, wodurch bestimmt wird, welcher Schiebetritt an den Stationen ausfährt.

Die Schiebetritte können auch derart angesteuert werden, dass die Ausschübe an einer Station unterschiedlich weit ausfahren, so dass die Trittflächen eine Treppe bilden.

In einer besonders vorteilhaften Ausgestaltung können alle Schiebetritte hinsichtlich der Befestigungselemente und Zentrierelemente sowie insbesondere der Steckelemente gleich ausgestaltet sein. Dementsprechend können auch die einzelnen Einschübe des Rahmens hinsichtlich der Befestigungselemente und Zentrierelemente sowie vorzugsweise der Steckelemente gleich ausgestaltet sein. Somit wird eine modulare Bauweise erreicht, so dass die Schiebetritte beliebig austauschbar sind.

Als Antrieb kann der Schiebetritt einen im Schiebetritt angeordneten elektrischen Motor und eine Spindelvorrichtung aufweisen. In einer bevorzugten Ausgestaltung weist der Schiebetritt eine Federkraftbremse und eine als Notentriegelungsvorrichtung wirkende Brems-Lüftungseinheit auf. Dies ermöglicht dem System im stromlosen Zustand, dass der Ausschub an jeder gewünschten Position gehalten bzw. verriegelt werden kann.

In einer vorteilhaften Ausgestaltung ist die Ein-/Ausstiegsvorrichtung derart ausgestaltet, dass das Eindringen von Wasser in den unteren Fahrzeugbereich verhindert wird und dass sie schalldämmend ist. Hierfür kann der Rahmen eine zur Trittfläche parallel verlaufende geschlossene Fläche aufweisen, auf welcher mindestens eine schalldämmende Matte angeordnet ist. Die mindestens eine Matte kann bevorzugt auch an der Unterseite der Fläche angeordnet sein, so dass im Falle eines Eindringens von Wasser die Matte nicht über einen längeren Zeitraum unter Wasser steht. Ferner kann die Ein-/Ausstiegsvorrichtung im Bereich der Einschuböffnung ein am Rahmen angeordnetes Wasserauffangblech aufweisen, so dass das Wasser nur frontal nach außen abfließen kann.

Die Ein-/Ausstiegsvorrichtung kann einen Sicherheitsschalter aufweisen, der bei eingefahrenem Zustand des Ausschubs betätigt wird und zugleich eine Haltefunktion für den Ausschub aufweist, so dass eine redundante Sicherung gegen ein unbeabsichtigtes Ausfahren erreicht wird.

Der Rahmen ist fest mit dem Fahrzeug verbunden. In einer vorteilhaften Ausgestaltung kann der Rahmen mittels ausrichtbaren Befestigungsvorrichtungen am Fahrzeug befestigt sein. Die Ausrichtbarkeit in alle drei Raumrichtungen kann durch zwei Winkelhalterungen erreicht werden, welche quer zueinander liegende Langlöcher aufweisen, wobei die Ausrichtung in der dritten Richtung durch Distanzscheiben erfolgt.

Ein mögliches Ausführungsbeispiel der Erfindung wird anhand der Figuren 1 bis 16 beschrieben. Es zeigen:
- Fig. 1: eine Ein-/Ausstiegsvorrichtung mit einem Rahmen und zwei Schiebetritten;
- Fig. 2: einen Schiebetritt aus Fig. 1;
- Fig. 3: den Schiebetritt gemäß Fig. 2 in einer um 180° gedrehten Ansicht;
- Fig. 4: eine vergrößerte Darstellung eines am Rahmen angebrachten Zentrierzapfens;
- Fig. 5: eine vergrößerte Darstellung einer am Schiebetritt angeordneten Zentrierbuchse;
- Fig. 6: eine vergrößerte Darstellung eines Befestigungselements an einem Schiebetritt;
- Fig. 7: eine vergrößerte Darstellung einer Befestigungsvorrichtung am Rahmen;
- Fig. 8: eine Explosionsdarstellung der Befestigungsvorrichtung nach Fig. 7
- Fig. 9: eine vergrößerte Darstellung der Steckelemente;
- Fig. 10: die zusammengesteckten Steckelemente;
- Fig. 11: die Steckelemente und Zentrierelemente ein einer Einzeldarstellung;
- Fig. 12: den am Rahmen angebrachte Zentrierzapfen und einen Stecker;
- Fig. 13: den Stecker in einer vergrößerten Darstellung;
- Fig. 14: den Stecker in einer Rückansicht;
- Fig. 15: einen Sicherheitsschalter bei ausgefahrenem Zustand des Schiebetritts;
- Fig. 16: den Sicherheitsschalter bei eingefahrenem Zustand des Schiebetritts.

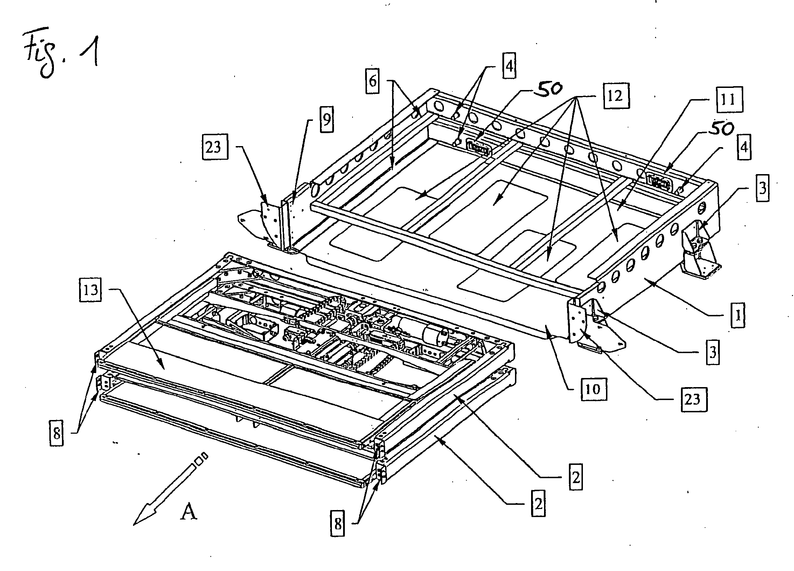

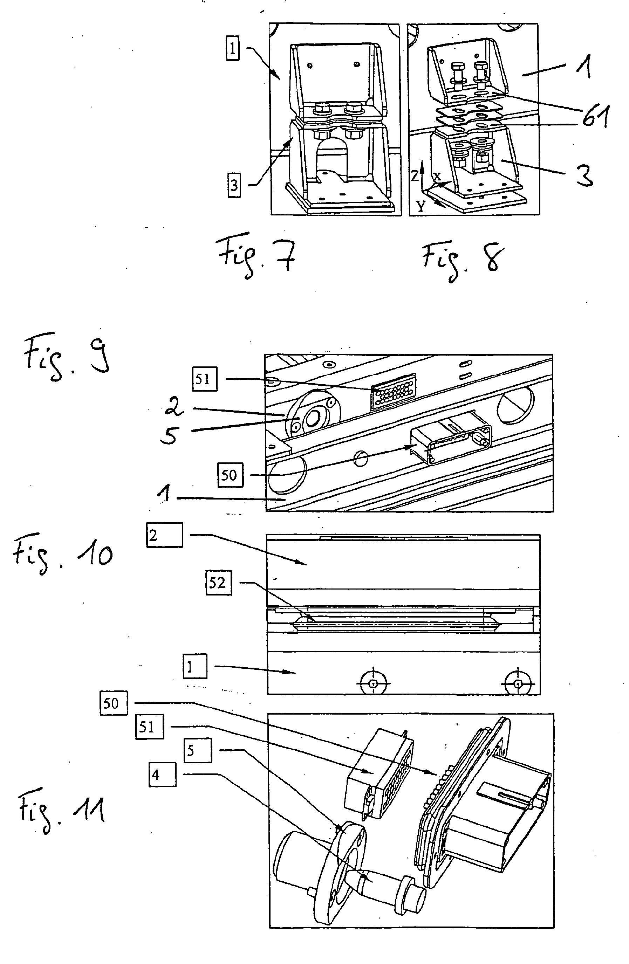

Die Fig. 1 zeigt eine Ein-/Ausstiegsvorrichtung mit einem Rahmen 1 und zwei in den Rahmen 1 einzeln einschiebbaren, baugleichen Schiebetritten 2. Der Rahmen 1 ist fest über vier Befestigungsvorrichtungen 3 mit einem nicht dargestellten Fahrzeug verbunden. Eine Befestigungsvorrichtung 3 ist in den Fig. 7 und Fig. 8 vergrößert dargestellt. Für eine genaue Ausrichtung weisen die Befestigungsvorrichtungen 3 quer zueinander liegende Langlöcher 61 auf.

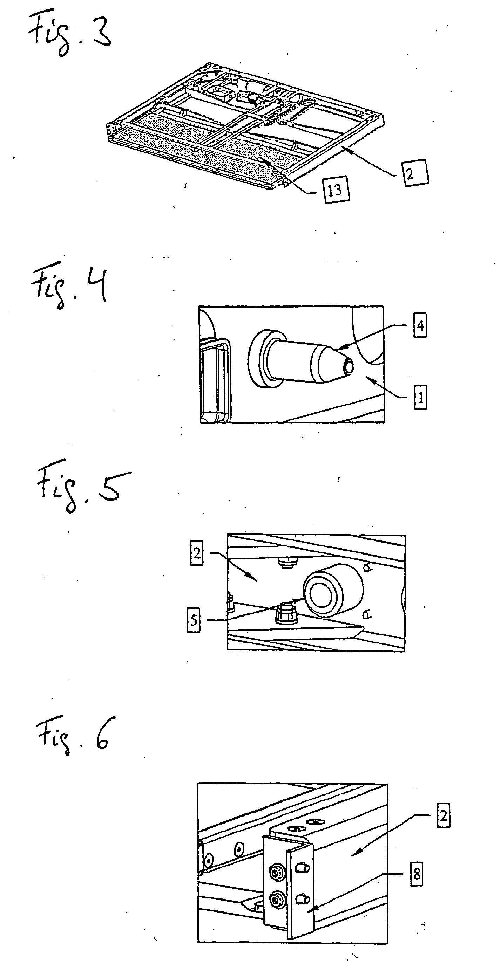

Die Ein-/Ausstiegsvorrichtung weist für jeden Schiebetritt 2 zwei Zentriereinrichtungen auf. Die Schiebetritte 2 weisen an der Rückseite jeweils zwei Zentrierbuchsen 5 aus Kunststoff als Zentrierelemente auf, welche im eingeschobenen Zustand eines Schiebetritts 2 mit am Rahmen 1 angeordneten Zentrierzapfen 4 aus Metall als Zentrierelemente zusammenwirken. Ein Zentrierzapfen 4 mit einem kegelstumpfförmigen Endabschnitt ist in Fig. 4 und eine Zentrierbuchse 5 ist in Fig. 5 vergrößert dargestellt.

Der Rahmen 1 weist für jeden Schiebetritt zwei Gleitschienen 6 als Führungsvorrichtungen auf. Für die elektrische Anbindung der Schiebetritte 2 weist der Rahmen zwei Stecker 50 auf, wobei jeder im eingeschobenen Zustand eines Schiebetritts 2 mit einer als Gegenstück ausgebildeten und an der Rückseite des Schiebetritts 2 angeordneten, in Fig. 9 dargestellten Steckdose 51 derart zusammenwirkt, dass eine elektrische Verbindung besteht.

Bei der Montage werden die Schiebetritte 2 einzeln durch die Einschuböffnung 10 an der Frontseite in den Rahmen 1 eingeschoben, bis sie von den Zentriereinrichtungen geführt und positioniert am hinteren Teil des Rahmens 1 anschlagen. Anschließend werden die Schiebetritte 2 über Befestigungseinrichtungen am Rahmen 1 verschraubt. Der Rahmen weist zu diesem Zweck Bohrungen 9 als Befestigungselemente auf. Die Schiebetritte 2 weisen entsprechende Haltewinkel 8 als Befestigungselemente auf. Ein Haltewinkel 8 ist in Fig. 6 vergrößert dargestellt. Dadurch, dass die Befestigungseinrichtungen im eingeschobenen Zustand der Schiebetritte 2 im Bereich der Einschuböffnung 10 liegen, sind diese leicht zugänglich, so dass eine Montage in wenigen Minuten durchführbar ist.

Für eine verbesserte Schalldämmung und zum Schutz gegen eindringendes Wasser weist der Rahmen 1 eine zur Trittfläche 13 parallel verlaufende, geschlossene Bodenfläche 11 auf, auf deren Unterseite vier schalldämmende Matten 12 durch Klebung befestigt sind.

Zum Anbringen einer fahrzeugspezifischen Blende weist der Rahmen 1 im Bereich der Einschuböffnung 10 beidseitig Befestigungswinkel 23 auf.

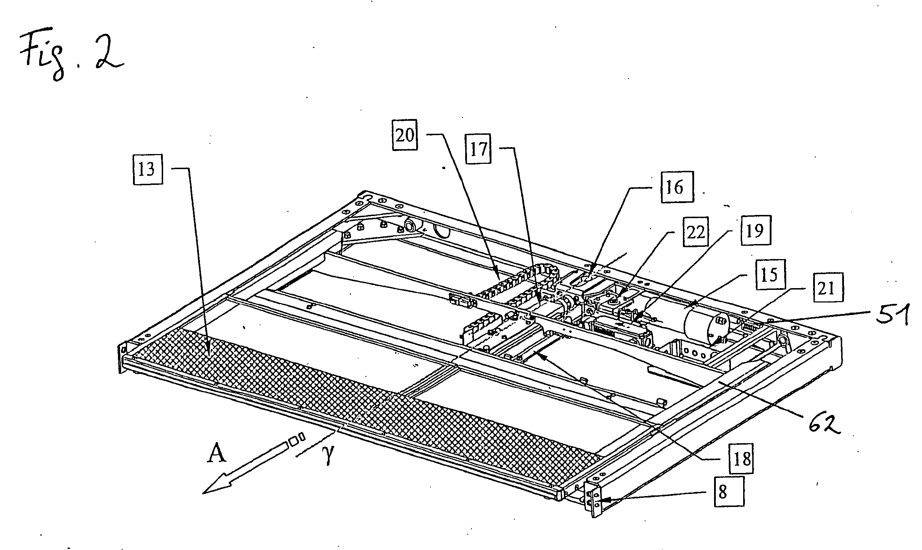

Die Fig. 2 zeigt einen Schiebetritt 2 mit einem in Ausfahrrichtung A ausgefahrenen Ausschub 62 mit einer belastbaren Trittfläche 13. Die Ausfahrbewegung wird von einem Elektromotor 15 über ein Winkelgetriebe 16 und über eine Spindelvorrichtung mit einem Spindelrohr 17 bewirkt. Damit die Bewegung geführt ist, weist der Schiebetritt 2 eine Führungsschiene 18 auf. Die elektrischen Leitungen für die Übermittlung von elektrischer Energie und elektrischen Signalen zum Ausschub 62 befinden sich in einer an einen Klemmkasten 21 angeschlossenen Energiekette 20. Der Antrieb weist eine integrierte Federkraftbremse als Halter auf, welche von einer als Notentriegelungseinheit wirkende Brems-Lüftungseinheit 22 gelöst werden kann.

In Fig. 3 ist ein Schiebetritt 2 in einer um 180° gedrehten Ansicht dargestellt. Die Schiebetritte 2 sind derart ausgestaltet, dass sie auch um 180° bezüglich zur Drehachse y, welche parallel zur Ausfahrrichtung A verläuft, gedreht in den Rahmen 1 einschiebbar sind. Der Ausschub 62 weist somit auf beiden Seiten eine Trittfläche 13 auf. In der gedrehten Stellung ist der Abstand der Trittfläche 13 vom Rahmen 1 verändert, so dass der Schiebetritt in einfacher Weise hinsichtlich der Höhe der Trittfläche 13 über dem Erdboden an das Fahrzeug angepasst werden kann.

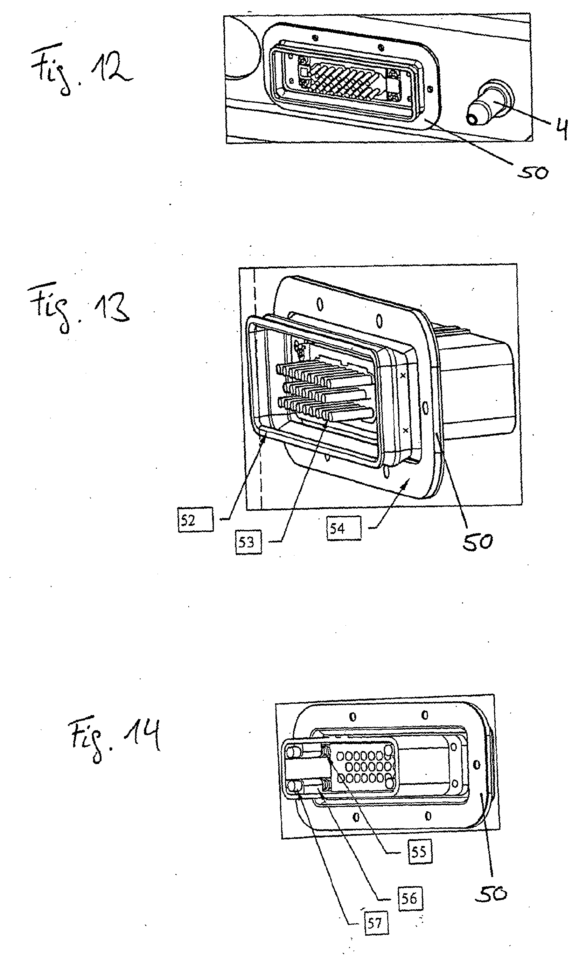

Die Herstellung der elektrischen Verbindung zwischen Rahmen 1 und Schiebetritt 2 ist in den Fig. 9 bis Fig. 14 dargestellt. Am Rahmen 1 ist neben dem Zentrierzapfen 4 ein Stecker 50 als erstes Steckelement angeordnet. Der Stecker 50 weist mehrer Pins 53 auf, welche in entsprechende Buchsen der am Schiebetritt 2 angeordneten Steckdose 51 als zweites Steckelement zusammenwirken. Die Steckdose 51 mit zum sicheren Positionieren trichterförmiger Steckdosenmundung ist elektrisch mit dem Klemmkasten 21 für die Verteilung der elektrischen Signale und der elektrischen Energie verbunden. Der Stecker 50 weist einen Faltenbalg 52 auf, der an einem Befestigungsblech 54 angeordnet ist. Der Faltenbalg 52 bewirkt eine in Fig. 10 dargestellte wasserdichte Verbindung im eingesteckten Zustand der Steckeinrichtung. An der Rückseite des Steckers befinden sich Druckfedern 55, welche auf in Führungsbuchsen 56 laufenden Führungsstangen 57 wirken, so dass eine sichere Steckverbindung erreicht wird.

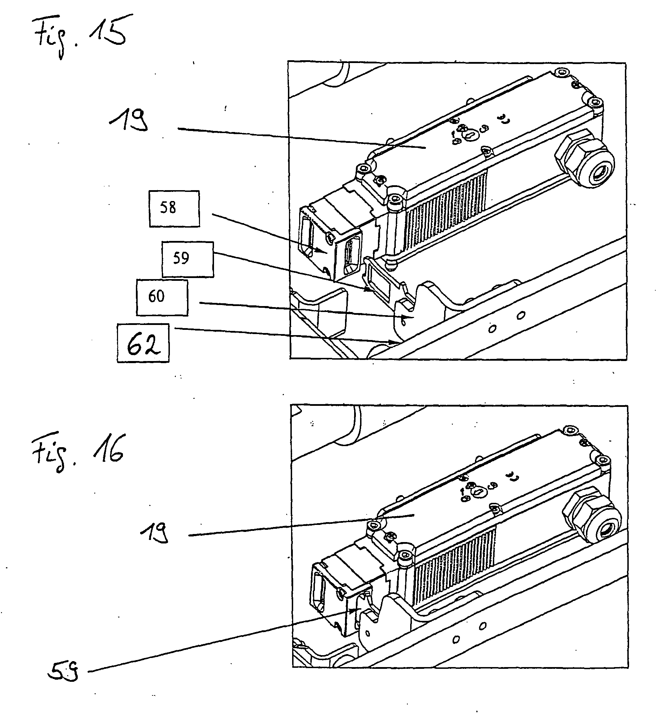

In Fig. 15 ist ein im Schiebetritt 2 angeordneter Sicherheitsschalter 19 dargestellt, welcher für die Sensierung des eingefahrenen Zustands des Ausschubs 62 zuständig ist. Aus diesem Grund ist an dem Ausschub 62 über eine Halterung 60 ein Betätiger 59 in Form eines rechteckigen Rahmens angeordnet, welcher in dem in Fig. 16 dargestellten, eingefahrenen Zustand des Ausschubs 62 in einen Betätigungskopf 58 des Sicherheitsschalters 19 eingerastet ist und somit den Schalter betätigt. Der Sicherheitsschalter 19 weist zugleich eine Haltefunktion für den Ausschub 62 auf. In nicht dargestellter Weise befinden sich innerhalb des Betätigungskopfs 5 Mittel, welche den rahmenförmigen Betätiger 59 im eingefahrenen Zustand formschlüssig verriegeln, so dass der Ausschub 62 gegen ein zufälliges Ausfahren redundant gesichert ist.

## Patentansprüche

1. Ein-/Ausstiegsvorrichtung für ein Fahrzeug des öffentlichen Personenverkehrs mit einem Schiebetritt (2), welcher in einen mit einem Fahrzeug fest verbundenen Rahmen (1) durch eine Einschuböffnung (10) einschiebbar ist und weicher einen durch einen Antrieb (15) ein- und ausfahrbaren Ausschub (62) mit einer Trittfläche (13) aufweist, wobei die Ein-/Ausstiegsvorrichtung mindestens eine Befestigungseinrichtung aufweist, welche ein am Rahmen (1) angeordnetes und ein am Schiebetritt (2) angeordnetes Befestigungselement (8, 9) umfasst, mittels welcher der Schiebetritt (2) am Rahmen (1) befestigbar ist,
**dadurch gekennzeichnet, dass**
- die Ein-/Ausstiegsvorrichtung eine Zentriereinrichtung aufweist, welche ein fest am Rahmen (1) angeordnetes und ein fest am Schiebetritt (2) angeordnetes Zentrierelement (4, 5) umfasst, welche derart zusammenwirken, dass beim Einschieben des Schiebetritts (2) in den Rahmen (1) der Schiebetritt (2) in eine vorgegebene Position positioniert wird,
- der Schiebetritt (2) auch um 180° bezüglich einer Drehachse, welche parallel zur Ausfahrrichtung (A) verläuft, gedreht in den Rahmen (1) einschiebbar ist.

2. Ein-/Ausstiegsvorrichtung nach Anspruch 1, **dadurch gekennzeichnet, dass** die Befestigungseinrichtung (8, 9) im Bereich der Einschuböffnung (10) angeordnet ist und dass die Zentriereinrichtung (4, 5) im der Einschuböffnung gegenüberliegenden Bereich der Vorrichtung angeordnet ist.

3. Ein-/Ausstiegsvorrichtung nach Anspruch 1 oder 2, **dadurch gekennzeichnet, dass** sie mehrere Zentriereinrichtungen (4, 5) aufweist, welche insbesondere nebeneinander angeordnet sind.

4. Ein-/Ausstiegsvorrichtung nach einem der vorhergehenden Ansprüche, **dadurch gekennzeichnet, dass** sie eine elektrische Steckeinrichtung aufweist, welche ein fest am Rahmen (1) angeordnetes und ein fest am Schiebetritt (2) angeordnetes Steckelement (50, 51) umfasst, welche derart zusammenwirken, dass im eingeschobenen Zustand des Schiebetritts (2) eine insbesondere wasserdichte Steckverbindung für die elektrische Anbindung des Schiebetritts (2) besteht.

5. Ein-/Ausstiegsvorrichtung nach einem der vorhergehenden Ansprüche, **dadurch gekennzeichnet, dass** der Rahmen (1) Führungsvorrichtungen, insbesondere Gleitschienen (6), für das Einschieben des Schiebetritts (2) in den Rahmen (1) aufweist.

6. Ein-/Ausstiegsvorrichtung nach einem der vorhergehenden Ansprüche, **dadurch gekennzeichnet, dass** ein Zentrierelement als Zapfen (4) und das damit zusammenwirkende Zentrierelement als entsprechende Buchse (5) ausgebildet ist.

7. Ein-/Ausstiegsvorrichtung nach Anspruch 6, **dadurch gekennzeichnet, dass** der Zapfen (4) einen kegelförmigen oder kegelstumpfförmigen Abschnitt aufweist.

8. Ein-/Ausstiegsvorrichtung nach Anspruch 6 oder 7, **dadurch gekennzeichnet, dass** der Zapfen (4) am Rahmen (1) und die Buchse (5) am Schiebetritt (2) angeordnet ist.

9. Ein-/Ausstiegsvorrichtung nach einem der vorhergehenden Ansprüche, **dadurch gekennzeichnet, dass** sie zwei oder mehr übereinander angeordnete Schiebetritte (2) aufweist, welche jeweils mittels Befestigungseinrichtungen (8, 9) am Rahmen (1) lösbar befestigbar sind, und dass sie für jeden Schiebetritt (2) mindestens eine Zentriereinrichtung (4, 5) aufweist.

10. Ein-/Ausstiegsvorrichtung nach Anspruch 9, **dadurch gekennzeichnet, dass** alle Schiebetritte (2) hinsichtlich der Befestigungselemente (9) und Zentrierelemente (5) sowie insbesondere der Steckelemente (50, 51) gleich ausgestaltet sind.

11. Ein-/Ausstiegsvorrichtung nach einem der vorhergehenden Ansprüche, **dadurch gekennzeichnet, dass** der Antrieb einen im Schiebetritt (2) angeordneten elektrischen Motor (15) und eine Spindelvorrichtung (17) umfasst.

12. Ein-/Ausstiegsvorrichtung nach einem der vorhergehenden Ansprüche, **dadurch gekennzeichnet, dass** der Schiebetritt (2) eine Federkraftbremse und eine Notentriegelungsvorrichtung, insbesondere eine Brems-Lüftungseinheit (22), aufweist.

13. Ein-/Ausstiegsvorrichtung nach einem der vorhergehenden Ansprüche, **dadurch gekennzeichnet, dass** der Rahmen (1) eine zur Trittfläche (13) parallel verlaufende geschlossene Fläche (11) aufweist, an welcher mindestens eine schalldämmende Matte (12) angeordnet ist.

14. Ein-/Ausstiegsvorrichtung nach einem der vorhergehenden Ansprüche, **dadurch gekennzeichnet, dass** im Bereich der Einschuböffnung (10) ein Wasserauffangblech am Rahmen (1) angeordnet ist.

15. Ein-/Ausstiegsvorrichtung nach einem der vorhergehenden Ansprüche, **dadurch gekennzeichnet, dass** sie einen Sicherheitsschalter (19) aufweist, welcher bei eingefahrenem Zustand des Ausschubs (62) betätigt wird und eine Haltefunktion für den Ausschub (62) aufweist.

16. Ein-/Ausstiegsvorrichtung nach einem der vorhergehenden Ansprüche, **dadurch gekennzeichnet, dass** der Rahmen (1) mittels ausrichtbaren Befestigungsvorrichtungen (3) am Fahrzeug befestigt ist.

## Claims

1. An embarking/disembarking device for a public transport vehicle comprising a retractable step (2) which may be inserted through an insertion opening (10) into a frame (1) which is fixedly connected to a vehicle and which comprises an extendable system (62) with a tread surface (13) which may be retracted and extended by means of a drive (15), the embarking/disembarking device comprising at least one fastening device which comprises a fastening element (8, 9) arranged on the frame (1) and a fastening element arranged on the retractable step (2), the retractable step (2) being able to be fastened to the frame (1) by means of said fastening element, **characterized in that**
- the embarking/disembarking device comprises a centring device which comprises a centring element (4, 5) arranged fixedly on the frame (1) and a centring element arranged fixedly on the retractable step (2), which cooperate such that when inserting the retractable step (2) into the frame (1) the retractable step (2) is positioned in a predetermined position,
- the retractable step (2) may also be inserted into the frame (1) rotated by 180° relative to a rotational axis, which extends parallel to the direction of extension (A).

2. The embarking/disembarking device according to Claim 1, **characterized in that** the fastening device (8, 9) is arranged in the region of the insertion opening (10) and **in that** the centring device (4, 5) is arranged in the region of the device opposing the insertion opening.

3. The embarking/disembarking device according to Claim 1 or 2, **characterized in that** it comprises a plurality of centring devices (4, 5) which are arranged, in particular, adjacent to one another.

4. The embarking/disembarking device according to one of the preceding claims, **characterized in that** it comprises an electrical plug device which comprises a plug element (50, 51) fixedly arranged on the frame (1) and a plug element fixedly arranged on the retractable step (2), which cooperate such that in the inserted state of the retractable step (2) an, in particular, water-tight plug connection is present for the electrical connection of the retractable step (2).

5. The embarking/disembarking device according to one of the preceding claims, **characterized in that** the frame (1) comprises guide devices, in particular sliding rails (6) for inserting the retractable step (2) into the frame (1).

6. The embarking/disembarking device according to one of the preceding claims, **characterized in that** a centring element is configured as a pin (4) and the centring element cooperating therewith is configured as a corresponding bushing (5).

7. The embarking/disembarking device according to claim 6, **characterized in that** the pin (4) comprises a conical or frustoconical portion.

8. The embarking/disembarking device according to claim 6 or 7, **characterized in that** the pin (4) is arranged on the frame (1) and the bushing (5) is arranged on the retractable step (2).

9. The embarking/disembarking device according to one of the preceding claims, **characterized in that** it comprises two or more retractable steps (2) arranged above one another, which in each case are able to be releasably fastened to the frame (1) by means of fastening devices (8, 9) and **in that** it comprises at least one centring device (4, 5) for each retractable step (2).

10. The embarking/disembarking device according to Claim 9, **characterized in that** all retractable steps (2) are designed the same with regard to the fastening elements (9) and centring elements (5) as well as, in particular, the plug elements (50, 51).

11. The embarking/disembarking device according to one of the preceding claims, **characterized in that** the drive comprises an electrical motor (15) arranged in the retractable step (2) and a spindle device (17).

12. The embarking/disembarking device according to one of the preceding claims, **characterized in that** the retractable step (2) comprises a spring-actuated brake and an emergency unlocking device, in particular a brake-venting unit (22).

13. The embarking/disembarking device according to one of the preceding claims, **characterized in that** the frame (1) comprises a closed surface (11) extending parallel to the tread surface (13), at least one sound-absorbing mat (12) being arranged on said closed surface.

14. The embarking/disembarking device according to one of the preceding claims, **characterized in that** a water collection plate is arranged on the frame (1) in the region of the insertion opening (10).

15. The embarking/disembarking device according to one of the preceding claims, **characterized in that** it comprises a safety switch (19) which is actuated in the retracted state of the extendable system (62) and which has a retaining function for the extendable system (62).

16. The embarking/disembarking device according to one of the preceding claims, **characterized in that** the frame (1) is fastened to the vehicle by means of fastening devices (3) which may be aligned.

## Revendications

1. Dispositif de montée/de descente d'un véhicule des transports en commun publics, avec une marche escamotable (2), qui à travers une ouverture d'insertion (10) est insérable dans un cadre (1) fixement relié avec un véhicule et qui comporte un insert (62) rentrant et sortant au moyen d'un entraînement (15) avec un giron (13), le dispositif de montée/de descente comportant au moins un système de fixation qui comprend un élément de fixation (8, 9) disposé sur un cadre (1) et un autre disposé sur la marche escamotable (2), au moyen desquels la marche escamotable (2) peut se fixer sur le cadre (1), **caractérisé en ce que**
- le dispositif de montée/de descente comporte un système de centrage, qui comprend un élément de centrage (4, 5) fixement disposé sur le cadre (1) et un autre disposé fixement sur la marche escamotable (2) qui coopèrent de telle sorte que lors de l'insertion de la marche escamotable (2) dans le cadre (1), la marche escamotable (2) se positionne dans une position prédéfinie,
- la marche escamotable (2) est également insérable dans le cadre (1) en étant tournée de 180° par rapport à un axe de rotation qui s'étend à la parallèle de la direction de sortie (A) .

2. Dispositif de montée/de descente selon la revendication 1, **caractérisé en ce que** le système de fixation (8, 9) est disposé dans la zone de l'ouverture d'insertion (10) et **en ce que** le système de centrage (4, 5) est disposé dans la zone du dispositif qui est opposée à l'ouverture d'insertion.

3. Dispositif de montée/de descente selon la revendication 1 ou 2, **caractérisé en ce qu'**il comporte plusieurs systèmes de centrage (4, 5) qui sont notamment disposés côte à côte.

4. Dispositif de montée/de descente selon l'un quelconque des revendications précédentes, **caractérisé en ce qu'**il comporte un système d'enfichage électrique, qui comprend un élément d'enfichage (50, 51) fixement disposé sur le cadre (1) et un autre fixement disposé sur la marche escamotable (2), qui coopèrent de telle sorte que lorsque la marche escamotable (2) est insérée, il soit créé une liaison par enfichage notamment étanche à l'eau pour le raccordement électrique de la marche escamotable (2).

5. Dispositif de montée/de descente selon l'une quelconque des revendications précédentes, **caractérisé en ce que** le cadre (1) comporte des dispositifs de guidage, notamment des coulisses (6) pour l'insertion de la marche escamotable (2) dans le cadre (1).

6. Dispositif de montée/de descente selon l'une quelconque des revendications précédentes, **caractérisé en ce qu'**un élément de centrage est conçu en tant que tenon (4) et que l'élément de centrage coopérant avec ce dernier est conçu en tant que douille (5) correspondante.

7. Dispositif de montée/de descente selon la revendication 6, **caractérisé en ce que** le tenon (4) comporte une partie conique ou tronconique.

8. Dispositif de montée/de descente selon la revendication 6 ou 7, **caractérisé en ce que** le tenon (4) est disposé sur le cadre (1) et la douille (5) est disposée sur la marche escamotable (2).

9. Dispositif de montée/de descente selon l'une quelconque des revendications précédentes, **caractérisé en ce qu'**il comporte deux ou plusieurs marches escamotables (2) superposées, qui peuvent chacune être fixées de façon amovible sur le cadre (1) au moyen de systèmes de fixation (8, 9) et **en ce que** pour chaque marche escamotable (2), il comporte au moins un système de centrage (4, 5).

10. Dispositif de montée/de descente selon la revendication 9, **caractérisé en ce que** toutes les marches escamotables (2) sont conçues de manière identique au niveau des éléments de fixation (9) et des éléments de centrage (5), ainsi que notamment au niveau des éléments d'enfichage (50, 51).

11. Dispositif de montée/de descente selon l'une quelconque des revendications précédentes, **caractérisé en ce que** l'entraînement comprend un moteur électrique (15) disposé dans la marche escamotable (2) et un dispositif de broche (17).

12. Dispositif de montée/de descente selon l'une quelconque des revendications précédentes, **caractérisé en ce que** la marche escamotable (2) comporte un frein à manque de courant et un dispositif de déverrouillage d'urgence, notamment une unité de freinage-desserrage du frein (22).

13. Dispositif de montée/de descente selon l'une quelconque des revendications précédentes, **caractérisé en ce que** le cadre (1) comporte une surface (11) fermée s'étendant à la parallèle du giron (13) sur laquelle est disposée au moins une natte insonorisante (12).

14. Dispositif de montée/de descente selon l'une quelconque des revendications précédentes, **caractérisé en ce que** dans la zone de l'ouverture d'insertion (10), une tôle collectrice d'eau est disposée sur le cadre (1).

15. Dispositif de montée/de descente selon l'une quelconque des revendications précédentes, **caractérisé en ce qu'**il comporte un interrupteur de sécurité (19) qui est manoeuvré lorsque l'insert (62) est rentré et qui présente une fonction de retenue pour l'insert (62).

16. Dispositif de montée/de descente selon l'une quelconque des revendications précédentes, **caractérisé en ce que** le cadre (1) est fixé sur le véhicule au moyen de dispositifs de fixation (3) orientables.
